# EUROPEAN PATENT APPLICATION

(11) **EP 2 003 102 A2**
(43) Date of publication of application: **17.12.2008**
(21) Application number: 07730493.9
(22) Date of filing: 15.03.2007
(51) Int. Cl.: C05F 17/02

(54) **COMPOSTER.**

(30) Priority: 16.03.2006 ES 200600657 U
(71) Applicant: Castejon-Travieso, Eugeni, 08860 Castelldefels (ES)
(72) Inventor: Castejon-Travieso, Eugeni, 08860 Castelldefels (ES)
(74) Representative: Barlocci, Anna
(86) International application number: PCT/ES2007/070053
(87) International publication number: WO 2007/104821

(57) **Abstract**

The composter (1) includes a body formed with at least one series of side panels (2) of plastic material that define an inner space (4) where organic waste is to be provided. At least the panels (2) are obtained by pressing of a material essentially consisting of plastic and other waste materials. The plastic may be from selective collection waste, such as paper, cardboard, fabric, PET, aluminium, etc.

A composter (1) is obtained having good technical features and with a low cost, by using an organic, recycled and recyclable material.

## Description

### Field of the Invention

The present invention relates to a composter for recycling of organic matter to be subsequently used as fertilizer. The composter of the invention comprises a body formed by series of side panels of plastic material that define an inner space where the organic matter is to be provided.

### Background of invention

Composting, as defined herein, refers to the practice of recycling organic waste (compost). Compost is a mixture of organic matter (food waste, such as peelings, vegetable waste, crushed eggshells, tea bags, coffee dregs, etc; plants, herbs, grass, etc.) decomposed and biologically transformed.

Composting therefore involves returning organic material to soil with the goal of obtaining fertilizer that could be used in an orchard, a garden, etc. in place of (or complementing) commonly used artificial fertilizers.

The use of composters for carrying out composting is known. The use of composters allows recycling organic remains in a convenient, easy and hygienic way avoiding the disadvantages of making a pile on the floor. A typical composter includes a body formed by side panels that define an inner space where the compost (organic matter) is stored. Panels are fitted with holes or openings to allow aeration of organic matter contained therein. Typically, the body of the composter has no base, so that the compost is always on the ground so that nature microorganisms come into contact with compost placed inside the composter and so that drainage of excess water from vegetables is allowed. The body of the composter may include a cover for closing the inner space.

Composters known so far are made of metal and more commonly of recycled plastic, for example injected PE. However, said composters are capital intensive because of the cost of materials and the cost of molds, with a mold for each different composter made through different injection molding techniques being required.

### Summary of the invention

The invention provides a composter that comprises, as noted above, a body formed with at least one series of plastic side panels that define an inner space where organic waste is placed. At least these panels that define the body of the composter of the invention are obtained by pressing a material consisting essentially of plastic and other waste materials, particularly consisting essentially of plastic from waste, for example waste from selective urban collection.

Preferably, the plastic from which at least said panels are obtained has a composition of 80-95% of polyolefins, and 5-20% of at least one element selected from paper, cardboard, fabric, PET, aluminium, with such elements being from waste, such as waste from selective urban collection.

In a preferred composition, said plastic has a composition of 85-90% of polyolefins and 10-15% of at least one element selected from paper, cardboard, fabric, PET, aluminium (obtained, for example, from Tetrabrik packages).

Polyolefins may comprise polypropylene (obtained, for example, from bottle caps), polyethylene (obtained, for example, from bags), or high-density polyethylene (HDPE) (obtained, for example, from detergent bottles).

These panels of the body of the composter may be reversible, such that they may be arranged upwards or downwards as desired. This allows mold costs to be reduced as well as the industrial process of manufacture to be simplified. Due to this feature, the capacity of the compost may be expanded by the user without having to purchase a new one. It is only necessary to acquire several individual pieces and combine them with those of the original composter.

The panels can be arranged in several rows of panels according to the desired height of the composter. At least some of the panels can be hinged to each other for providing greater accessibility to the interior of the composter and further facilitating the assembly detachment. For this purpose, claws are provided in the side edge of the panel such that, in an assembled position, the claws of a panel are arranged above the claws of another, adjacent panel, with a bar or rod passing through an inner space in each claw such that adjacent panels of the body of the composter are hingedly joined.

The body of the composter may further include a top cover (made from said plastic material) which can be either press fitted in the inner profile of the upper portion of the body of the composter or hinged to the top portion thereof.

The manufacturing process of the parts defining the composter of the invention, the side panels and the top cover, starts with recovery of plastic waste from urban collection for recycling. Plastic waste is cut up into pieces and mixed in the above described preferred proportions before being loaded into the production line.

In this production process, the plastic is passed through heating means so that temperature of the plastic is raised up to 170 °C, in which plastic becomes melted into a homogeneous paste. In this state, the plastic is ready for being shaped, providing an appropriate amount thereof into a suitable mold where it is under pressure, in the order of a hundred tons. The already made parts are then removed from the mold and they can be passed through a quality control station for checking the characteristics of obtained plastic parts (thickness, weight, etc.) and rejecting those that do not meet the required quality requirements. The pieces considered as being defective are cut up into pieces once again and the plastic is reused again to make other pieces for the composter.

A composter with good technical features and with a low cost is thus obtained by using an organic, recycled and recyclable material.

### Brief description of the drawings

Other objects, advantages and features of the composter of the present invention will be clear from the description of the invention of a preferred embodiment. This description is given by way of a non limiting example and it is shown in the appended drawings herein.

In these drawings,
Figure 1 is a perspective view of one embodiment in which the side panels and the top cover in a closed position are shown;
Figure 2 is a perspective view of the embodiment of the composter in Fig. 1, in which the top cover is partially open to allow access inside the composter;
Figure 3 is a front elevational view of one of the panels of the body of the composter of the invention;
Figure 4 is a sectional side elevational view of one of the panels of the body of the composter of the invention taken along line AA' in Fig. 3;
Figure 5 is a perspective view of the composter of the invention, which is formed by arranging three coupled modular bodies.

### Detailed description of a preferred embodiment

One example of embodiment of a composter, which has been indicated as a whole with reference numeral 1, has been shown in the figures herein enclosed in the present specification.

The composter 1 shown is formed with a substantially frusto pyramidal shaped body with an essentially square base. The geometry of the composter 1, however, may be different, as required. In the example described, this geometry is determined by the shape of plastic side panels 2 each of which is trapezoidal in shape.

In the example of the composter 1 in the figures, the body thereof is defined by four series of said side panels 2 and a top cover 3. The top cover 3 is hinged, through a suitable hinge 3a, to the upper portion of the body of the composter 1.

Each series of side panels 2 comprises a bottom panel and a top panel. The series of panels 2 may be as many as desired according to the height required for the composter 1 depending on recycling capacity needs in the interior 4 thereof.

The body of the composter 1 has no bottom base. Thus, compost (not shown) is always on the ground and nature microorganisms are in contact with the compost placed inside the composter 1 further allowing drainage of excess water from vegetables.

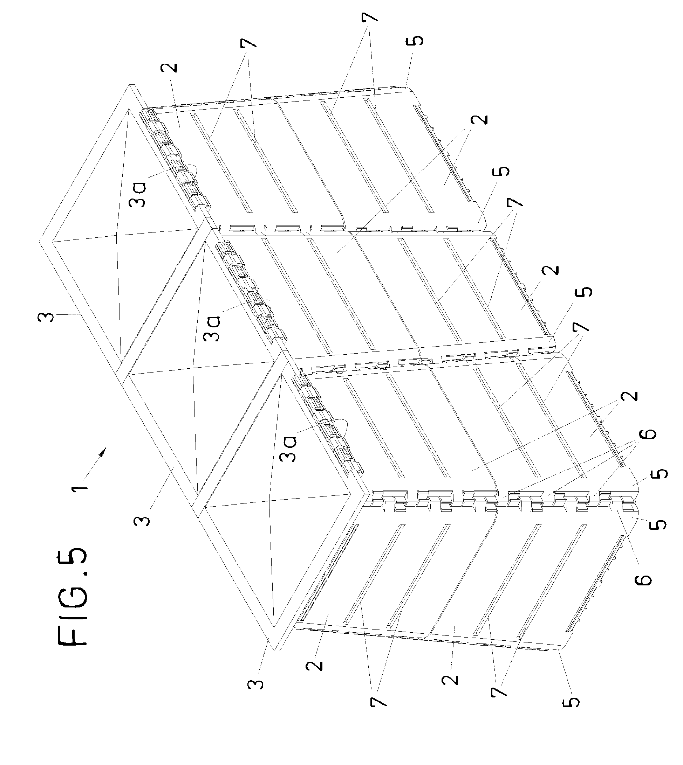

In the embodiment shown in the figures, the panels 2 of the body of the composter are reversible, so that they can be arranged upwards or downwards as desired. In the example shown in Fig. 5, which illustrates a composter 1 formed with three bodies, the central module of the composter 1 has the panels 2 in a reversed position relative to the panels 2 of the adjacent end modules. Therefore, it is thus possible for the composter 1 to expand its capacity without having to replace it with a new, larger capacity composter 1.

Each panel is fitted 2, at its side edge 5, with claws 6. In an assembled position, the claws of a panel 6 are arranged above the claws 6 of an adjacent panel 2. The claws 6 define an inner space through which a bar (not shown) can be passed for hingedly joining the panels 2 to one another.

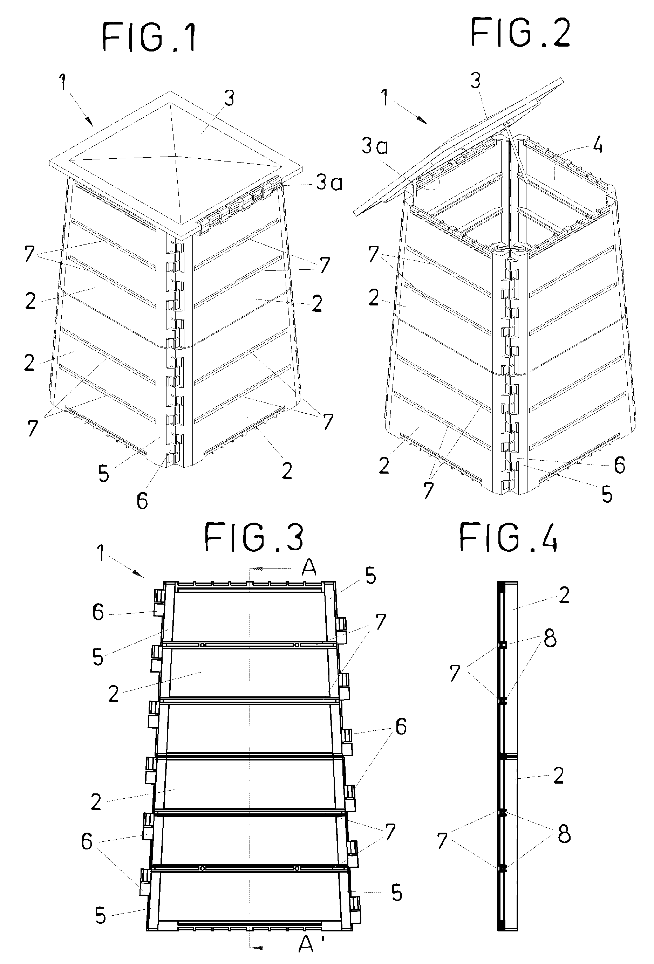

As shown in the figures, each panel 2 has a pair of substantially parallel horizontal grooves 7 for allowing compost aeration and thus promoting the aerobic process of its formation while allowing odors to be avoided. These aeration grooves 7 are arranged in correspondence with ribs 8 formed on the inner portion of each panel 2, as shown in the sectional view of Fig. 3 of the drawings.

The panels 2 of the composter 1 are made of a plastic material. This material has the feature that it is obtained by a pressing process of a material essentially consisting of plastic and other waste materials, specifically plastic from urban waste collection. This plastic is composed of 85-90% of polyolefins, which may include polypropylene (obtained, for example, from bottle caps), polyethylene (obtained, for example, from bags), or high-density polyethylene (HDPE) (obtained, for example, from detergent bottles) and 10-15% of paper, cardboard, fabric, PET, aluminium (obtained, for example, Tetrabrik packages). These elements are from urban waste collection. The top cover 3 can also be made from this material.

While the present invention has been described in the specification and has been shown in the accompanying drawings with reference to a preferred embodiment thereof, the composter of the invention is susceptible to various changes without departing from the scope of protection defined by the following claims.

## Claims

1. Composter (1) which comprises a body formed with at least one series of side panels (2) of plastic material that define an inner space (4) where organic waste is to be provided, **characterized in that** at least said panels (2) are obtained by pressing of a material essentially consisting of plastic and other waste materials.

2. Compost (1) as claimed in claim 1, wherein at least said panels (2) are obtained by pressing of a material essentially consisting of plastic from selective collection waste.

3. Compost (1) as claimed in claim 1 or claim 2, wherein said plastic has a composition of 80-95% of polyolefins, and 5-20% of at least one element selected from paper, cardboard, fabric, PET, aluminium, with such elements being from waste, such as waste from selective urban collection

4. Compost (1) as claimed in claim 1 or claim 2, wherein the plastic has a composition of 85-90% of polyolefins and 10-15% of at least one element selected from paper, cardboard, fabric, PET, aluminium.

5. Compost (1) as claimed in claim 3, wherein said polyolefins comprise at least one of polypropylene, polyethylene and HDPE.

6. Compost (1) as claimed in claim 1 or claim 2, wherein said side panels (2) are reversible, such that they may be arranged upwards or downwards.

7. Compost (1) as claimed in claim 1 or claim 2, wherein the body further comprises a top cover (3).

8. Compost (1) as claimed in claim 7, wherein the top cover (3) is press fitted in the upper portion of the body of the composter (1).

9. Compost (1) as claimed in claim 7, wherein said top cover (3) is hinged to the upper portion of the body of the composter (1).
